# FASCICULE DE BREVET EUROPEEN

(11) **EP 0 981 505 B1**
(45) Date de publication et mention de la délivrance du brevet: **26.03.2003**
(21) Numéro de dépôt: 98924416.5
(22) Date de dépôt: 11.05.1998
(51) Int. Cl.: C04B 24/00, C04B 28/02, E04F 15/12, C04B 111/62

(54) **COMPOSITION AUTONIVELANTE A BASE DE CIMENT**
SELBSTNIVELLIERENDE ZEMENTZUSAMMENSETZUNG
SELF-LEVELLING CEMENT BASED COMPOSITION

(30) Priorité: 12.05.1997 FR 9706010
(43) Date de publication de la demande: 01.03.2000
(73) Titulaire: Lafarge SA, 75782 Paris Cedex 16 (FR)
(72) Inventeur: GUERINET, Jean-Paul, F-60200 Compiegne (FR); MOSQUET, Martin, F-45300 Dandonville (FR); BOSC, François, 91800 BRUNOY (FR); CHAPPUIS, Jacques, F-38290 Frontonas (FR)
(74) Mandataire: Tilloy, Anne-Marie
(86) Numéro de dépôt international: FR9800938
(87) Numéro de publication internationale: WO98051637

(56) Documents cités:
- DE-U- 29 518 306
- FR-A- 2 696 736
- FR-A- 2 704 853
- US-A- 5 403 394
- PATENT ABSTRACTS OF JAPAN vol. 095, no. 011, 26 décembre 1995 & JP 07 215750 A (NITTO CHEM IND CO LTD), 15 août 1995

## Description

La présente invention concerne la préparation de compositions autonivelantes à base de ciment, ainsi que leur utilisation dans la fabrication de chapes de sol, comme les chapes non adhérentes, les chapes adhérentes et les chapes enrobant des éléments chauffants.

On connaît bien des techniques de préparation de compositions autonivelantes à base de ciment, de charges minérales, d'adjuvants organiques, dont un fluidifiant, et d'eau. Le grand intérêt des compositions autonivelantes réside normalement dans la facilité et la rapidité de mise en oeuvre puisque la mise à niveau de ces compositions avec une règle ou un moyen équivalent est facilitée ou n'est pas nécessaire.
Ainsi, on connaît :
- des compositions autonivelantes à base de ciment renfermant, à titre d'exemple de fluidifiant, une mélamine formaldéhyde, un dérivé de la mélamine ou un naphtalène sulfoné. Mais, généralement, du fait de leur fluidité limitée dans le temps, ces compositions doivent être mises en place sur le chantier rapidement après leur préparation (voir, par exemple, le modèle d'utilité DE-29518306). Des solutions existent pour maintenir la fluidité dans le temps de telles compositions, soit en additionnant le fluidifiant à échéances décalées, soit en incorporant plus de fluidifiant, soit en augmentant la quantité d'eau de gâchage, mais elles ne sont pas satisfaisantes, pour des raisons économiques et/ou techniques ;
- des compositions autonivelantes à base de ciment renfermant un fluidifiant particulier permettant d'obtenir un maintien de la fluidité dans le temps. Il peut s'agir d'un fluidifiant à base de monomères vinyliques carboxylés : voir, par exemple, les demandes de brevet européen n°0725044 et n°0753489 où un maintien de fluidité d'au moins 6 heures est obtenu. Le principal inconvénient des compositions décrites dans ces deux demandes de brevet provient des retards de prise importants. Ceci rend difficile voire impossible, le lendemain, l'accès de personnes sur les chapes fabriquées avec ces compositions, par exemple pour les besoins des travaux de finition.

Les fluidifiants connus à cette date dans le domaine des chapes autonivelantes peuvent être classés, d'une manière générale, en quatre grandes familles :
- les lignosulfonates ;
- les fluidifiants de type polynaphtalènesulfonate ;
- les fluidifiants de type polymélaminesulfonate ;
- les fluidifiants à base de monomères vinyliques carboxylés et éventuellement de monomères vinyliques sulfonés.

Comme indiqué précédemment, les fluidifiants à base de monomères vinyliques carboxylés sont actuellement préférés car ils conduisent à un maintien de la fluidité dans le temps, mais les maintiens de fluidité sont souvent obtenus aux dépens des résistances à court terme.

De façon surprenante, il a été découvert une composition autonivelante à base de ciment et renfermant à titre de fluidifiant un composé organique n'appartenant pas aux quatre familles de fluidifiants précitées : ce composé organique est hydrosoluble ou hydrodispersable et comporte au moins un groupement amino-di(alkylènephosphonique), éventuellement salifié, et au moins une chaîne polyoxyalkylée. De plus, la composition autonivelante qui contient ce composé organique possède les avantages déterminants qui suivent :
1) la composition peut être préparée dans une centrale à béton classique, sans modification de cette centrale à béton, et être livrée prête à l'emploi par camions malaxeurs sur le chantier. Le cas échéant, la fluidité de la composition est ajustée par un ajout supplémentaire de fluidifiant et/ou d'eau sur le chantier. Ainsi, l'homogénéité du mélange est favorisée ;
2) la fluidité de la composition élimine les opérations traditionnelles d'étalement, de vibration, de mise à niveau avec une règle ou un moyen équivalent, ainsi que l'opération de talochage, sous réserve que les conditions normales de mise en oeuvre soient respectées par l'homme du métier. Pour obtenir une surface plane et lisse, il suffit de passer une barre de finition et/ou un balai à la surface du produit frais. En outre, le maintien de cette fluidité pendant une période de temps suffisante pour mettre en place le matériau (de l'ordre de 2 à 4 heures), et la bonne cinétique de prise et de durcissement de la composition permettent l'accès de personnes sur la chape le lendemain de la mise en place de la composition ;
3) la composition, avec laquelle une chape peut être rapidement exécutée, permet d'atteindre une grande productivité journalière, d'au moins 800 m² par jour avec une équipe de deux ou trois ouvriers chapistes.

Plus précisément, la composition autonivelante pour chapes de sol selon l'invention, qui procure les avantages 1) à 3) précités, est caractérisée en ce qu'elle est à base de ciment Portland (CEM I) ou de ciment mélangé CEM II ou CEM III (selon le projet de norme européenne prEN 197-1 d'octobre 1997), et en ce qu'elle comprend en outre, au moins du sable, au moins une charge minérale fine dont les particules ont des dimensions ne dépassant pas 200µm, de l'eau, au moins un fluidifiant (I) qui est un composé organique (I) hydrosoluble ou hydrodispersable, comportant au moins un groupement amino-di(alkylènephosphonique) et au moins une chaîne polyoxyalkylée, ou au moins un sel du composé (I), ledit composé (I) répondant à la formule : 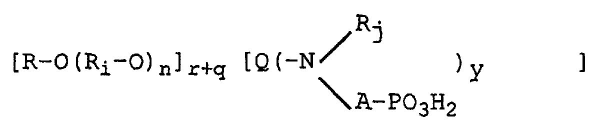 dans laquelle :
- R est un atome d'hydrogène ou un groupe hydrocarboné monovalent, saturé ou non, comportant de 1 à 18 (inclus) atomes de carbone et éventuellement un ou plusieurs hétéroatomes : de préférence, R est un atome d'hydrogène ou un groupe hydrocarboné monovalent, saturé ou non, comportant de 1 à 4 atomes de carbone ;
- 50 % à 100 % des Rᵢ sont l'éthylène, 0 à 50 % des Rᵢ sont le propylène et 0 à 5 % des éventuels autres Rᵢ sont semblables ou différents entre eux et représentent un alkylène tel que le butylène, l'amylène, l'octylène ou le cyclohexène, ou un arylène comme le styrène ou le méthylstyrène ; ces Rᵢ renferment éventuellement un ou plusieurs hétéroatomes ;
- Q est un groupe hydrocarboné comportant de 2 à 18 (inclus) atomes de carbone et éventuellement un ou plusieurs hétéroatomes ; de préférence Q est un groupe hydrocarboné comportant de 2 à 12 (inclus) atomes de carbone, de préférence encore de 2 à 6 (inclus) atomes de carbone, encore mieux représente l'éthylène ou le propylène ;
- A est un groupe alkylidène comportant de 1 à 3 (inclus) atomes de carbone : de préférence A représente le groupe méthylène ;
- les Rⱼ sont semblables ou différents entre eux et peuvent être choisis parmi:
   * le groupe A-PO₃H₂, A ayant la signification précitée,
   * et le groupe 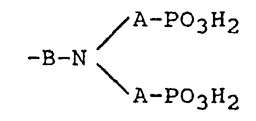
      - dans lequel B désigne un groupement alkylène comportant de 2 à 8 (inclus) atomes de carbone : de préférence, B représente l'éthylène ou le propylène et A a la signification précitée ;
- "n" est un nombre entier compris entre 20 et 250, bornes incluses ;
- "r" est le nombre des groupes (R-O(Rᵢ-O)n] portés par l'ensemble des Rⱼ,
- "q" est le nombre des groupes [R-O(Rᵢ-O)n] portés par Q,
- la somme "r+q" est au plus égale à 3 ;
- "y" est un nombre entier égal à 1 ou 2.

Egalement, la composition autonivelante selon l'invention est caractérisée en ce que :
- la quantité de particules fines de dimensions ne dépassant pas 100 micromètres, provenant des charges minérales fines et du ciment, est égale ou supérieure à 500 kg par m³ de ladite composition autonivelante,
- le rapport pondéral eau sur ciment est égal ou supérieur à 0,6.

Une description détaillée des composés (I) et de leur procédé de préparation est donnée dans le brevet européen n°0663892.
Par composition autonivelante, on entend, dans le cadre de la présente invention, une composition ayant une fluidité, juste avant coulage de la chape de sol, telle qu'après remplissage d'un cône de référence (petit diamètre 55 mm, grand diamètre orienté vers le bas 95 mm, hauteur 70 mm) puis retrait du cône de référence, on obtient un étalement libre circulaire d'un diamètre au moins égal à 15 cm, de préférence au moins égal à 17 cm, encore mieux de l'ordre de 23 cm +/- 3 cm.
Avantageusement, le composé (I) utilisé à titre de fluidifiant dans la composition autonivelante selon l'invention vérifie une ou plusieurs des caractéristiques qui suivent :
1- au moins 50 % des Rᵢ sont l'éthylène et les éventuels autres Rᵢ sont le propylène ;
2- Rⱼ est choisi parmi les groupes, éventuellement salifiés, -CH₂-PO₃H₂, -C₂H₄N(CH₂-PO₃H₂)₂ et -C₃H₆N(CH₂-PO₃H₂)₂;
3- "n" est compris entre 30 et 150 (bornes incluses), encore mieux entre 50 et 100 (bornes incluses) ;
4- "r+q" est égale à 1 ;
5- "y" est égal à 1.

De très bons résultats ont été obtenus avec un composé (I) diphosphoné dans lequel Rᵢ est l'éthylène, Rⱼ est -CH₂-PO₃H₂, n est compris entre 30 et 150 (bornes incluses), de préférence entre 50 et 100 (bornes incluses), "r+q" est égale à 1 et "y" est égal à 1, tel que le composé (I) de formule (II): 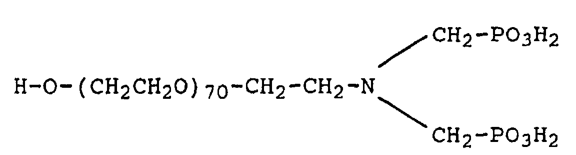 et ses sels.

Avantageusement, la quantité du fluidifiant (I) comportant au moins un groupement amino-di(alkylènephosphonique) et au moins une chaîne polyoxyalkylée, dans la composition autonivelante, est comprise entre 0,2 et 2 % en poids en sec, rapporté au poids de ciment, de préférence entre 0,3 et 0,8 % en poids en sec.

La granulométrie du sable utilisé dans la composition autonivelante selon l'invention peut varier entre 0 et 10 mm, préférentiellement entre 0 et 5 mm.

Conformément à une variante de réalisation de la composition autonivelante selon l'invention, en plus du fluidifiant (I) répondant à la formule (I) précitée, on prévoit dans la composition autonivelante au moins un fluidifiant (PCP), hydrosoluble ou hydrodispersable, de type acide polycarboxylique et renfermant des chaînes polyéthers.
Ces fluidifiants (PCP), qui sont à base de monomères vinyliques carboxyliques, et éventuellement, de monomères sulfonés, sont bien connus et sont notamment décrits dans le brevet américain US-5,614,017 et le brevet européen EP0612702.
De préférence, on fait varier le rapport en poids du fluidifiant (I) sur le fluidifiant (PCP) de 0,1 à 10.
La combinaison des fluidifiants (I) et (PCP) permet de préparer des compositions autonivelantes de ciment à la fluidité souhaitée avec des teneurs en eau réduites. En outre, en faisant varier la proportion du fluidifiant (I) sur le fluidifiant (PCP), on peut moduler le maintien de la fluidité dans le temps des compositions autonivelantes de ciment, en particulier des compositions autonivelantes à base de ciment mélangé CEM II ou CEM III (selon la norme européenne prEN 197-1).
De préférence, le fluidifiant (PCP) prévu dans la composition autonivelante selon l'invention renferme des chaînes polyéthers de différentes longueurs. De préférence, le fluidifiant (PCP) prévu dans la composition autonivelante selon l'invention est telle que les chaînes polyéthers renferment, en moyenne, au moins 50 % d'unités oxyéthylènes [pourcentage exprimé sur le total des motifs oxyalkylènes du fluidifiant (PCP)]. De préférence encore, les autres motifs oxyalkylènes sont des motifs oxypropylènes.

Avantageusement, la composition autonivelante selon l'invention comprend au moins un agent antimousse.
La nature chimique de l'agent antimousse n'est pas critique. De préférence, on choisit le tributylphosphate. La quantité d'agent antimousse est généralement comprise entre 0,001 % et 0,3 % en poids, rapporté au poids de ciment.

Avantageusement, la composition autonivelante selon l'invention comprend au moins un agent épaississant.
Comme agent épaississant pouvant être utilisé dans la composition autonivelante faisant l'objet de la présente invention, on peut citer des composés minéraux tels que la sépiolite ou des silices ultrafines, ou des composés organiques tels que des dérivés de la cellulose ou des polysaccharides de poids moléculaire élevé, comme des gommes de xanthane, ou des mélanges de deux ou plusieurs des agents épaississants précités. La quantité d'agent épaississant peut être comprise entre 0,005 % et 0,05 % en poids en sec rapporté au poids de ciment.

Avantageusement, on prévoit des charges minérales fines dans la composition autonivelante selon l'invention elles ont généralement des dimensions ne dépassant pas 200 micromètres. A titre de charges minérales fines convenant à l'invention, on peut citer les cendres volantes, les fillers calcaires, les fumées de silice, le métakaolin, les laitiers moulus ou un mélange d'au moins deux d'entre elles.
Selon un mode de réalisation préféré, la composition autonivelante selon l'invention comprend au moins 500 kg par m³ de fines particules de dimensions ne dépassant pas de préférence 100 microns, ces particules étant constituées essentiellement de charges minérales fines et de ciment. En effet, dans ces conditions, les avantages supplémentaires suivants ont été atteints : la composition autonivelante selon l'invention , une fois qu'elle est mise en place, ne présente quasiment pas, voire pas du tout de phénomènes de ségrégation des agrégats minéraux, et de ressuage, ni de remontées de particules fines ou de bulles en surface, sous réserve de respecter les conditions normales de mise en oeuvre bien connues de l'homme du métier (telles que, dans le cas de la fabrication d'une chape adhérente, traiter correctement le béton support avant la mise en place de la composition, soit en le mouillant avec de l'eau ou en appliquant un primaire d'adhérence). La composition autonivelante selon l'invention, une fois durcie, conduit à une chape présentant un bon aspect de surface, lisse et plan, sans nécessité d'un ponçage.

Le cas échéant, la composition autonivelante selon l'invention peut également comprendre au moins l'un des composés qui suivent : un polymère organique, des fibres synthétiques, minérales ou métalliques, un accélérateur, un retardateur, un réducteur de retrait, un entraîneur d'air, un agent hydrofuge, etc.

Lorsqu'un agent antimousse et, éventuellement, un agent épaississant sont prévus dans la composition autonivelante selon l'invention, on les introduit avantageusement simultanément avec le fluidifiant (I) dans cette composition, au moyen d'un prémélange uniforme et stable. De préférence, ce prémélange renferme essentiellement :
- de l'eau ;
- au moins un agent antimousse non hydrosoluble ou faiblement hydrosoluble ;
- au moins un fluidifiant (I) répondant à la formule (I) et, éventuellement, un autre fluidifiant, tel qu'un fluidifiant (PCP), hydrosoluble ou hydrodispersable ;
- au moins un composé organique (o) contenant :
   * au moins une fonction amine primaire, secondaire ou tertiaire, éventuellement partiellement ou totalement neutralisée par un acide de Brönsted, organique ou minéral ;
   * et au moins une chaîne alkyle ou alkyle-aryle, linéaire ou ramifiée, saturée ou insaturée, comprenant au moins 8 atomes de carbone, et éventuellement des hétéroatomes, choisis parmi l'oxygène, le soufre et l'azote ;
- au moins un stabilisant minéral quand le pH dudit prémélange est supérieur à 7, tel que des argiles et les sépiolites ;
- éventuellement, un acide ou une base pour ajuster le pH dudit prémélange.

Dans ce prémélange :
- par "agent antimousse" non hydrosoluble ou faiblement hydrosoluble", on entend un agent antimousse faiblement ou non soluble dans les milieux aqueux à température ambiante (environ 20°C) et à la pression atmosphérique ;
- par "mélange uniforme", on entend un mélange qui, laissé au repos, peut aller d'un mélange limpide (comme une microémulsion) à un mélange trouble (comme une émulsion huile dans eau). Parfois, une fine pellicule, généralement de la mousse, pourra être présente à la surface du mélange uniforme.

Le composé organique (O) est de préférence choisi parmi l'amine oléique, l'amine de coprah, l'amine de suif et les dérivés de ces amines, en particulier les dérivés de ces amines avec un motif d'oxyéthylène ou une chaîne contenant au maximum 8 motifs d'oxyéthylènes.

Selon une forme de réalisation particulière de l'invention, la composition autonivelante comprend :
(a) 200 à 400 kg/m³ de ciment Portland ;
(b) 100 à 400 kg/m³ de charges minérales fines de sorte que la quantité de particules fines des dimensions ne dépassant pas 100 micromètres provenant du ciment et des charges minérales fines soit égale ou supérieure à 50 kg/m³ de la composition autonivelante ;
(c) 1100 à 1600 kg/m³ de sable de granulométrie maximale inférieure à 10 mm, de préférence inférieure ou égale à 5 mm ;
(d) de l'eau, dans un rapport (E/C) compris entre 0,6 et 1,2 ;
(e) au moins un agent antimousse ;
(f) au moins un agent épaississant ;
(g) au moins un composé (I), à titre de fluidifiants, à raison de 0,2 à 2 % en poids sec rapporté au poids de ciment, et éventuellement au moins un fluidifiant (PCP).

Dans les deux formes précitées de réalisation de l'invention, les constituants (e) et (g) et éventuellement le constituant (f) peuvent être introduits simultanément, au moyen du prémélange décrit plus haut.

L'invention se réfère également à une chape de sol caractérisée par le fait qu'elle est fabriquée à partir d'une composition autonivelante comme définie ci-dessus.

Une telle chape de sol peut comporter en outre, sur sa surface supérieure, une pellicule d'un produit de cure déposé par exemple par pulvérisation ou tout autre moyen adéquat.
L'invention concerne en outre un procédé de fabrication d'une chape de sol caractérisé par les étapes suivantes :
- préparation d'un mélange d'une composition autonivelante, telle que définie dans la description ci-dessus ;
- transport éventuel dudit mélange dans un camion malaxeur sur le chantier de la chape de sol ;
- préparation du support de la chape, neuf ou restauré, conformément aux règles du métier en vigueur dans le pays considéré. A titre d'exemple, en France, on se référera aux documents techniques unifiés (D.T.U.) concernés, à savoir le D.T.U. 26-2, le D.T.U. 65-7 et le D.T.U. 65-8, et aux cahiers de prescriptions techniques en vigueur ;
- éventuellement, ajustement de la rhéologie du mélange au moyen d'une addition supplémentaire du fluidifiant défini ci-dessus, ou d'eau ;
- pompage, coulée dudit mélange sur le support et passage en surface de la barre de finition.

La composition autonivelante selon l'invention peut être préparée, soit par mélange sur chantier ou en centrale à béton, soit par prémélange de tout ou partie de ses constituants dans une unité de fabrication de prémélanges, ces compositions intermédiaires ou prémélanges étant ultérieurement gâchés avec de l'eau et, si nécessaire, avec des constituants complémentaires.

Comme indiqué plus haut, la fluidité du mélange avant l'opération de coulée est telle que lorsqu'un échantillon de ce mélange est versé dans un cône de référence (petit diamètre 55 mm, grand diamètre orienté vers le bas 95 mm, hauteur 70 mm), quand le cône rempli de mélange est retiré, on obtient un étalement libre circulaire d'un diamètre au moins égal à 15 cm, de préférence au moins égal à 17 cm, encore mieux de l'ordre de 23 cm, plus ou moins 3 cm.

Outre les avantages énoncés ci-dessus, la composition autonivelante selon l'invention conduit à une planéité nettement améliorée sous la règle de 2 mètres (selon le D.T.U. 26-2 de Septembre 1982). Cette planéité est généralement inférieure à 1 mm sous la règle de 2 mètres.

L'invention va maintenant être décrite au travers d'un exemple illustratif et non limitatif de l'invention.

### EXEMPLE 1

### Fabrication d'une chape de sol adhérente de 60 m² sur un support ancien en béton.

L'ensemble de la surface du béton ancien est nettoyé puis aspiré afin d'éliminer toute partie non adhérente. Un primaire d'adhérence est alors répandu en une couche. On en utilise 200g/m². Ce primaire est constitué d'une dispersion aqueuse de copolymères vinyliques. On laisse sécher ce primaire pendant deux heures.

La composition autonivelante utilisée est une composition prête à l'emploi qui est fabriquée en centrale à béton, en deux charges de 2 m³ chacune. La formule de la composition autonivelante est la suivante (en kg en sec par m³) :
- ciment Portland (CEM1 52,5 selon la norme NF P15-301 de 1994): 350
- cendres volantes : 250
- sablon (de 0 à 1 mm) : 200
- sable (de 0 à 5 mm) : 1105
- fluidifiant [composé (I) diphosphoné et polyoxyéthylé, de formule (II), décrit ci-dessus] : 1,5
- épaississant, une gomme de xanthane : 0,045
- antimousse : un tributylphosphate : 0,4
- eau : 240 litres

Cette composition autonivelante est livrée en camion malaxeur standard.
On coule une chape fluide de 5 cm d'épaisseur. La fluidité, mesurée en cm d'étalement, au cône de référence, est égale à 25 cm au moment du coulage et après un temps d'attente de 2 heures après fabrication de la composition en centrale à béton. Cette fluidité est conservée pendant l'opération de coulage de la chape qui dure environ 30 minutes, la densité de la composition autonivelante est égale à 2,15 et la quantité d'air occlus est égale à 1,8 % (en volume).

Cette composition autonivelante conserve une fluidité suffisante (23 cm, plus ou moins 3 cm au cône de référence) jusqu'à 4 heures après le gâchage avec une ouvrabilité convenable permettant à l'aide d'une pompe à mortier classique, de couvrir, avec une équipe de deux ou trois chapistes, une surface de 1000 m² par jour, sans fatigue excessive.

Avant de couler la chape :
- les points singuliers (angles saillants et pieds de portes) sont traités avec une armature de verre commercialisée sous la dénomination WG 210G par la société CHOMARAT (A la place de cette armature de verre on peut mettre un treillis antifissure ou tout autre trame métallique ou végétale) ;
- les parois verticales sont désolidarisées de la chape coulée par une bande de mousse de 0,5 cm d'épaisseur.
La finition de la surface de la chape s'exécute à l'aide d'une barre métallique (i.e. barre de finition) par passage en surface de cette barre, ou, éventuellement, à l'aide d'un balai, pendant que la composition est encore fluide.

Les performances de la chape durcie sont égales voire supérieures à celles des chapes à base de ciment, fabriquées et posées de façon traditionnelle. Ainsi, les performances mécaniques en compression (Rc) et en flexion (Rf) sont :

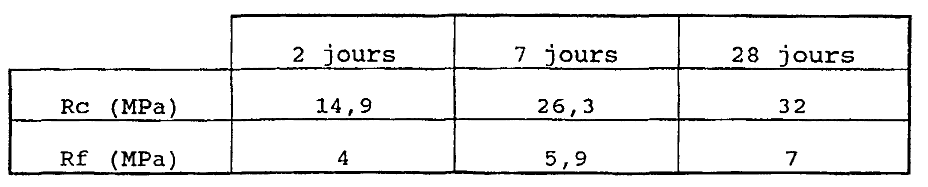

La planéité sous la règle de 2 mètres, selon le D.T.U. 26-2 de Septembre 1982, est inférieure à 1 mm.
En outre :
- aucun phénomène de ségrégation ou de ressuage n'a été constaté ;
- aucun phénomène de remontées de particules fines ou de bulles en surface n'a été constaté ;
- la surface de la chape durcie est lisse, plane et dure, sans pellicule de surface. Ceci autorise la pose directe de la plupart des revêtements de sol sans préparation préalable ;
- la cinétique de prise et de durcissement est rapide : la chape est accessible le lendemain de sa mise en place pour des travaux de finition ;
- la composition autonivelante précitée convient également pour fabriquer une chape non adhérente (désolidarisée ou flottante sur une couche d'isolant) ou une chape chauffante renfermant un système de chauffage par le sol.

### EXEMPLE 2

### Fabrication d'une chape de sol de 33 m² et d'épaisseur moyenne égale à 7-8 cm, désolidarisée et sans armature, sur un film plastique posé sur un support ancien en béton.

La chape ancienne a été cassée. Sur le sol dégagé des déchets de l'ancienne chape cassée, on pose un film plastique.

La composition autonivelante utilisée est une composition prête à l'emploi qui est fabriquée en centrale à béton, en deux charges de 1,5 m³ chacune. La formule de la composition autonivelante est la suivante (en kg en sec par m³) :
- ciment Portland (CEM 1 52,5) de Cormeilles : 230 ;
- cendres volantes : 370
- sablon (de 0 à 0,4 mm) : 220
- sable (de 0 à 5 mm) : 1065
- prémélange (a) contenant le composé (I) diphosphoné et polyoxyéthylé de formule (II), décrit ci-dessus, à teneur en extrait sec égale à 40 % : 4,5 kg en humide par m³ de la composition autonivelante ;
- fibres polypropylène de 15 mm de longueur moyenne : 1;
- eau : 260 litres.

La composition du prémélange (a) est la suivante (en % en poids) :
- composé (I) de formule (II) : 41 % ;
- tributylphosphate : 6,3 % ;
- amine oléique à 2 moles d'oxyde d'éthylène commercialisée sous la dénomination NORAMOX 02 par la société CECA : 3 % ;
- sépiolite commercialisée sous la dénomination PANGEL 59 par la société COMPTOIR DES MINERAUX ET MATIERES PREMIERES (C.M.M.P.) : 1,3 % ;
- eau : 37,9 % ;
- diéthanolamine (en solution à 30 %) : 10,5 %.

Cette composition autonivelante est livrée en camion malaxeur standard.

Sous abri, on coule une chape fluide de 7-8 cm d'épaisseur. La fluidité, mesurée en cm d'étalement, au cône de référence, est égale à 23 cm au moment du coulage et après un temps d'attente de 1 heure après fabrication de la composition en centrale à béton. Cette fluidité est conservée pendant l'opération de coulage de la chape qui dure environ 20 minutes. Les conditions au moment du coulage étaient une température ambiante de 13°C et une hygrométrie voisine de 80 % (le temps était pluvieux).
Cette composition autonivelante présente une fluidité excellente, une très bonne pompabilité et une ouvrabilité convenable permettant à l'aide d'une pompe à mortier classique, de couvrir, avec une équipe de deux ou trois chapistes, une surface de 1000 m² par jour, sans fatigue excessive.

La finition de la surface de la chape est aisée et s'exécute à l'aide d'une barre métallique (i.e. barre de finition) par passage en surface de cette barre. Le passage du balai en finition pendant que la composition est encore fluide améliore encore l'état de surface. Il faut noter que l'autonivellement de cette chape ressemble à celui de la chape fluide d'anhydrite réputée pour cette propriété.

Les performances de la chape durcie sont égales voire supérieures à celles des chapes à base de ciment, fabriquées et posées de façon traditionnelle. Ainsi, les performances mécaniques en compression (Rc) et en flexion (Rf) sont :

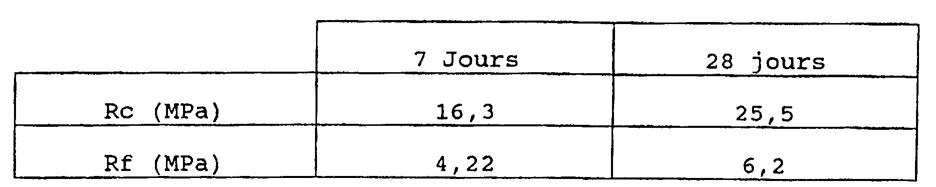

La planéité sous la règle de 2 mètres, selon le D.T.U. 26-2 de Septembre 1982, est inférieure à 2 mm.
En outre :
- aucun phénomène de ségrégation ou de ressuage n'a été constaté ;
- aucun phénomène de remontées de particules fines ou de bulles en surface n'a été constaté ;
- la surface de la chape durcie est lisse, plane et dure, sans pellicule de surface. Ceci autorise la pose directe de la plupart des revêtements de sol sans préparation préalable, en l'occurrence d'un carrelage scellé ;
- la cinétique de prise et de durcissement est rapide : on peut marcher sur la chape le lendemain de sa mise en place, 18 h après coulage, avec précaution ;
- quatre mois après la réalisation de la chape, aucun désordre n'a été constaté : pas de fissure, bonne dureté de surface, planéité inférieure à 2 mm sous la règle de 2 m.

### EXEMPLE 3

### Fabrication d'une chape de sol de 280 m² en plancher chauffant, au niveau d'un premier étage.

### Préparation du chantier (non chauffé mais clos)

Le système de chauffage par le sol à eau chaude, basse température, consiste en des tubes encastrés dans des plaques de polystyrène à plots jointifs.
Un treillis métallique 50x50 mm antifissures est ensuite posé ainsi que des bandes de rives permettant de désolidariser la chape des parois verticales.
Les parois verticales sont désolidarisées de la chape coulée par une bande de mousse de 0,5 cm d'épaisseur.

La composition autonivelante utilisée est une composition prête à l'emploi, fabriquée en centrale à béton en trois charges de 5,25 m³, 5,25 m³ et 3,75 m³. La formule de la composition autonivelante est la suivante (en kg en sec par m³) :
- ciment Portland (CEM1 52,5) de Cormeilles : 230 ;
- cendres volantes : 370 ;
- sable (de 0 à 5 mm) : 1285 ;
- prémélange (a) décrit dans l'exemple 2 : 4,5 kg en humide par m³ de la composition autonivelante ;
- fibres polypropylène de 15 mm de longueur moyenne : 1;
- eau : 274 litres.

On coule une chape fluide de 6 cm d'épaisseur dont 3 cm au-dessus des plots. La fluidité, mesurée en cm d'étalement, au cône de référence, est égale à 22 cm au moment du coulage et après un temps d'attente et de transport de 1 heure après fabrication de la composition en centrale à béton. Ainsi, on a aucune difficulté pour atteindre les 5 m du second étage. Cette fluidité est conservée pendant l'opération de coulage de la chape qui dure environ 1 heure par charge, la densité de la composition autonivelante est égale à 2,1 et la quantité d'air occlus est égale à 2 %.

La finition de la surface de la chape s'exécute par deux passes croisées d'une barre métallique (i.e. barre de finition) par passage en surface de cette barre et passage d'un balai, pendant que la composition est encore fluide.

Les performances de la chape durcie sont égales voire supérieures à celles des chapes à base de ciment, fabriquées et posées de façon traditionnelle. Ainsi, les performances mécaniques en compression (Rc) et en flexion (Rf) sont :

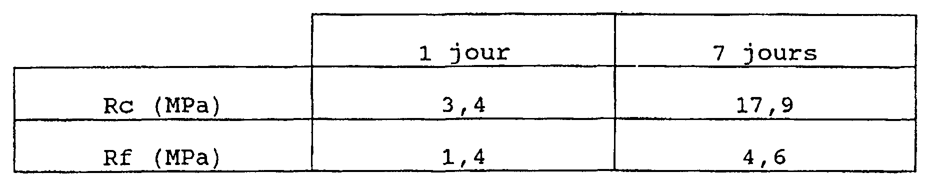

La planéité sous la règle de 2 mètres de la chape obtenue dans les conditions du D.T.U. 26-2 de Septembre 1982, est de l'ordre du mm, soit nettement inférieure à la valeur limite de 5 mm prescrite par ce D.T.U. 26-2.

En outre :
- aucun phénomène de ségrégation ou de ressuage n'a été constaté ;
- aucun phénomène de remontées de particules fines ou de bulles en surface n'a été constaté ;
- la surface de la chape durcie est lisse, plane et dure, sans pellicule de surface. Ceci autorise la pose directe de la plupart des revêtements de sol sans préparation préalable, en l'occurrence un carrelage ;
- la cinétique de prise et de durcissement est rapide : on marche sur la chape le lendemain. La chape est praticable à tous les corps de métier 2 jours après ;
- aucune fissuration après 2 mois.

### EXEMPLE 4

### Fabrication d'un mortier fluide en centrale à béton, destiné à être coulé en chape désolidarisée sur film plastique sur une dalle de béton ancien en épaisseur moyenne de 4 cm.

La composition autonivelante utilisée est une composition prête à l'emploi, fabriquée en centrale à béton, en une gâchée de 0,750 m³.
La formule de la composition autonivelante est la suivante (en kg en sec par m³) :
- ciment Portland CEM II 32,5 du Val d'Azergues : 400
- filler calcaire : 100
- sable de 0 à 4 mm : 1385
- fibres polypropylène de 15 mm de longueur moyenne : 0,8
- eau : 246 litres

Cette composition autonivelante comprend en outre un additif fluidifiant contenant le composé diphosphoné et polyoxyéthylé de formule (II), décrit ci-dessus, à teneur en extrait sec égal à 30 % et un fluidifiant PCP de type acide polycarboxylique et renfermant des chaînes polyéthers : 4,5 kg en humide par m³ de la composition autonivelante.

### Préparation du fluidifiant PCP par estérification partielle d'un acide polyacrylique par un méthyl éther de polyéthylène glycol monofonctionnel.

Les matières premières employées sont les suivantes :
- 120 g d'acide poly(méth)acrylique commercialisé par BASF sous la dénomination Sokalan CP10S. Son poids moléculaire moyen en poids est égal à 4000 Daltons. Il est dilué à 50 % dans l'eau ;
- 252 g d'un méthyl éther de polyéthylène glycol (type M750 de Hoechst) de poids moléculaire moyen en poids égal à 750 Daltons ;
- 0,60 g d'hydroxyde de lithium.

Dans un réacteur émaillé, équipé d'une agitation, d'un dispositif de distillation et d'un système de mise sous vide partiel, on introduit les matières premières précitées, dans l'ordre suivant :
- l'acide poly(méth)acrylique ;
- l'hydroxyde de lithium ;
- le méthyl éther de polyéthylène glycol (produit liquide à 50°C).

Dès la fin de l'introduction du méthyl éther de polyéthylène glycol, on met le réacteur sous vide partiel (20 à 30 mm Hg) avec une couverture d'azote. Ensuite, on chauffe, vers 60∼75°C : on obtient le début de distillation de l'eau apportée avec l'acide poly(méth)acrylique. Puis on monte la température à 165∼175°C pour estérifier. Pendant la réaction d'estérification, on enlève l'eau formée. Après 6 heures à 165∼175°C, on vérifie l'état d'avancement de la réaction par une analyse d'indice d'acide et un contrôle chromatographique en phase liquide par perméation de gel (GPC) avec un étalonnage polyéthylène glycol (PEG).

L'indice acide visé en fin de réaction est égal à 56 mg KOH/g (ceci correspond à une estérification de 40 % des fonctions carboxyliques de l'acide poly(méth)acrylique de départ).
En fin de réaction, on refroidit le réacteur à une température de l'ordre de 80°C puis on prépare l'additif fluidifiant de la façon suivante : dans le mélange réactionnel, on ajoute le composé (I) diphosphoné et polyoxyalkylé de formule (II), l'amine oléique à 2 moles d'oxyde d'éthylène (commercialisé sous la dénomination Noramox 02 par C.E.C.A.), du tributylphosphate (antimousse) et de la sépiolite. Enfin, on dilue le produit avec de l'eau et on ajoute de la diéthanolamine. L'additif fluidifiant ainsi préparé est prêt à l'emploi. Sa composition est la suivante (en pourcentage en poids) :
- composé (I) diphosphoné et polyoxyalkylé de formule II : 30
- fluidifiant PCP à 30 % d'extrait sec : 8
- tributylphosphate : 3
- amine oléique de dénomination commerciale NORAMOX 02 : 3
- sépiolite de dénomination commerciale PANGEL S9 : 1,6
- eau : 45,9
- diéthanolamine : 8,5.

Cette composition autonivelante est livrée en camion malaxeur standard de volume utile : 6 m³.
On coule directement ce mortier fluide sur le site de la centrale. La fluidité, mesurée en cm d'étalement, au cône de référence est égale à 21 cm au moment du coulage, après un temps d'attente de 1h après fabrication. Cette fluidité est conservée pendant l'opération de coulage de la chape qui dure environ 15 min. Les conditions au moment du coulage étaient de 15°C et une hygrométrie voisine de 70 %.

Cette composition autonivelante présente une fluidité excellente et une ouvrabilité convenable permettant une mise en place aisée.

La finition de la surface s'exécute aisément par passage en surface de la barre métallique. Le passage du balai en finition améliore encore l'état de la surface.

Les performances mécaniques de cette chape en compression et en flexion sont très bonnes et sont résumées ci-dessous :

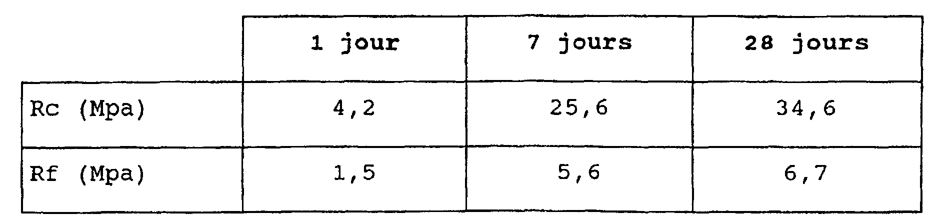

La planéité sous la règle de 2 mètres est inférieure à 2 mm. Aucun phénomène de ségrégation ou de ressuage n'a été constaté. La surface de la chape durcie est lisse, plane et dure. La chape est praticable dès le lendemain du coulage et pourra recevoir sans préparation supplémentaire un revêtement de carrelage scellé.

## Revendications

1. Composition autonivelante pour la fabrication d'une chape de sol, **caractérisée en ce que** :
- ladite composition comprend du ciment Portland (CEMI) ou du ciment mélangé (CEM II ou CEM III), du sable, au moins une charge minérale fine dont les particules ont des dimensions ne dépassant pas 200 micromètres et de l'eau,
- la quantité de particules fines de dimensions ne dépassant pas 100 micromètres, provenant des charges minérales fines et du ciment, est égale ou supérieure à 500 kg par m³ de ladite composition autonivelante,
- le rapport pondéral eau sur ciment est égal ou supérieur à 0, 6,
- ladite composition comprend en outre au moins un fluidifiant qui est un composé organique (I) hydrosoluble ou hydrodispersable, comportant au moins un groupement amino-di(alkylènephosphonique) et au moins une chaîne polyoxyalkylée, ou au moins un sel du composé organique (I), ledit composé (I) répondant à la formule (I): 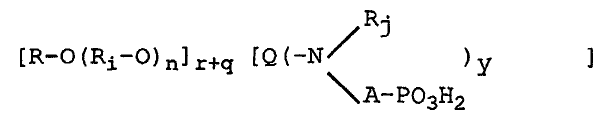
dans laquelle :
• R est un atome d'hydrogène ou un groupe hydrocarboné monovalent saturé ou non comportant de 1 à 18 (inclus) atomes de carbone et éventuellement un ou plusieurs hétéroatomes,
• 50 à 100 % des Ri sont l'éthylène, 0 à 50 % des Ri sont le propylène et 0 à 5 % des éventuels autres Rᵢ sont semblables ou différents entre eux et représentent un alkylène tel que le butylène,
• l'amylène, l'octylène ou le cyclohexène, ou un arylène comme le styrène ou le méthylstyrène ; les Rᵢ renferment éventuellement un ou plusieurs hétéroatomes,
• Q est un groupe hydrocarboné comportant de 2 à 18 (inclus) atomes de carbone et éventuellement un ou plusieurs hétéroatomes,
• A est un groupe alkylidène comportant de 1 à 3 inclus atomes de carbone,
• les Rⱼ sont semblables ou différents entre eux et peuvent être choisis parmi:
* le groupe A-PO₃H₂, A ayant la signification précitée,
* et le groupe 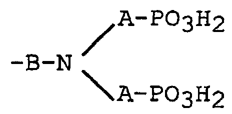
- dans lequel B désigne un groupement alkylène comportant de 2 à 8 (inclus) atomes de carbone et A a la signification précitée,
• "n" est un nombre entier compris entre 20 et 250,
• "r" est le nombre des groupes [R-O(Rᵢ-O)n] portés par l'ensemble des Rⱼ,
• "q" est le nombre des groupes [R-O(Rᵢ-O)n] portés par Q,
• la somme "r+q" est au plus égale à 3,
• "y" est un nombre entier égal à 1 ou 2,
**en ce que** la fluidité de la composition autonivelante avant l'opération de coulée est telle que lorsqu'un échantillon de cette composition est versé dans un cône de référence, ayant un petit diamètre de 55 mm, un grand diamètre orienté vers le bas de 95 mm, une hauteur de 70 mm, quand le cône rempli est retiré, on obtient un étalement libre circulaire d'au moins 15 cm de diamètre.

2. Composition autonivelante selon la revendication 1, **caractérisée en ce que** le groupement R du fluidifiant (I) est un atome d'hydrogène ou un groupe hydrocarboné monovalent, saturé ou non, comportant de 1 à 4 atomes de carbone.

3. Composition autonivelante selon la revendication 1 ou 2, **caractérisée en ce que** au moins 50 % des Rᵢ du fluidifiant (I) sont l'éthylène et les éventuels autres Rᵢ sont le propylène.

4. Composition autonivelante selon la revendication 1, 2 ou 3, **caractérisée en ce que** le groupe hydrocarboné Q du fluidifiant (I) comporte de 2 à 12 (inclus) atomes de carbone.

5. Composition autonivelante selon la revendication 4, **caractérisée en ce que** le groupe hydrocarboné Q du fluidifiant (I) comporte de 2 à 6 atomes de carbone.

6. Composition autonivelante selon la revendication 5, **caractérisée en ce que** le groupe hydrocarboné Q du fluidifiant (I) est l'éthylène ou le propylène.

7. Composition autonivelante selon l'une des revendications précédentes, **caractérisée en ce que** le groupe Rⱼ du fluidifiant (I) est choisi parmi les groupes, éventuellement salifiés, -CH₂-PO₃H₂, -C₂H₄N(CH₂-PO₃H₂)₂ et -C₃H₆N(CH₂-PO₃H₂)₂.

8. Composition autonivelante selon l'une des revendications précédentes, **caractérisée en ce que** la formule du fluidifiant (I) est telle que "n" est compris entre 30 et 150 (bornes incluses).

9. Composition autonivelante selon la revendication 8, **caractérisée en ce que** la formule du fluidifiant (I) est telle que "n" est compris entre 50 et 100 (bornes incluses).

10. Composition autonivelante selon l'une des revendications précédentes, **caractérisée en ce que** la formule du fluidifiant (I) est telle que la somme "r+q" est égale à 1.

11. Composition autonivelante selon l'une des revendications précédentes, **caractérisée en ce que** la formule du fluidifiant (I) est telle que "y" est égal à 1.

12. Composition autonivelante selon la revendication 1, **caractérisée en ce que** la formule du fluidifiant (I) est telle que Rᵢ est l'éthylène, Rⱼ est -CH₂-PO₃H₂, n est compris entre 30 et 150 (bornes incluses), de préférence entre 50 et 100 (bornes incluses), "r+q" est égal à 1 et "y" est égal à 1.

13. Composition autonivelante selon la revendication 12, **caractérisée en ce que** le composé (I), éventuellement salifié, a pour formule (II) :

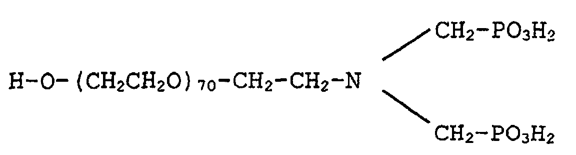

14. Composition autonivelante selon l'une des revendications précédentes, **caractérisée en ce que** la quantité de composé (I) est comprise entre 0,2 et 2 % en poids en sec rapporté au poids de ciment, de préférence entre 0,3 et 0,8 %.

15. Composition autonivelante selon l'une des revendications précédentes, **caractérisée en ce que** la composition autonivelante comprend au moins un agent épaississant.

16. Composition autonivelante selon l'une des revendications précédentes, **caractérisée en ce que** la composition autonivelante comprend en outre un fluidifiant (PCP), hydrosoluble ou hydrodispersable, à base de monomères vinyliques carboxyliques et éventuellement de monomères vinyliques sulfonés, et renfermant des chaînes polyéthers.

17. Composition autonivelante selon l'une des revendications précédentes, **caractérisée en ce que** la composition autonivelante comprend au moins un agent antimousse.

18. Composition autonivelante selon l'une des revendications précédentes, **caractérisée en ce que** la composition autonivelante comprend des charges minérales fines.

19. Composition autonivelante selon l'une des revendications précédentes, **caractérisée en ce qu'**elle comprend :
- 200 à 400 kg/m³ de ciment Portland ;
- 100 à 400 kg/m³ de charges minérales fines ;
- 1100 à 1600 kg/m³ de sable de granulométrie maximale inférieure à 10 mm ;
- de l'eau, dans un rapport (E/C) compris entre 0,6 et 1,2 ;
- au moins un agent antimousse ;
- au moins un agent épaississant ;
- au moins un composé (I), à titre de fluidifiant, à raison de 0,2 à 2 % en poids sec rapporté au poids de ciment, et éventuellement au moins un fluidifiant de type PCP.

20. Composition autonivelante selon la revendication 19, **caractérisée en ce que** le sable a une granulométrie maximale inférieure ou égale à 5 mm.

21. Composition autonivelante selon l'une des revendications précédentes, **caractérisée en ce que** sa fluidité avant l'opération de coulée est telle que l'étalement libre circulaire obtenu avec le cône de référence est au moins égal à 17 cm de diamètre.

22. Composition autonivelante selon l'une des revendications précédentes, **caractérisée en ce que** sa fluidité avant l'opération de coulée est telle que l'étalement libre circulaire obtenu avec le cône de référence est de l'ordre de 23 cm, plus ou moins 3 cm.

23. Chape de sol, **caractérisée en ce qu'**elle est fabriquée à partir d'une composition autonivelante définie dans l'une quelconque des revendications 1 à 22.

## Claims

1. A self-leveling composition for the manufacturing of a floor screed, **characterized in that**:
- said composition comprises Portland cement (CEM I) or composite cement (CEM II or CEMIII), sand, at least fine mineral aggregates having particle dimensions not exceeding 200 µm, and water,
- quantity of fine particles of dimensions not exceeding 100 µm, from cement and fine mineral aggregates, is equal to or greater than 500 kg per m³ of said self-leveling composition,
- the water-to-cement ratio is equal to or greater than 0.6,
- said composition further comprises at least one plasticizer which is a water-soluble or water-dispersible organic compound (I) containing at least one aminodi (alkylenephosphohic) group and at least one polyoxyalkyl chain, or at least one salt of the organic compound (1), said compound (1) having the formula (1): 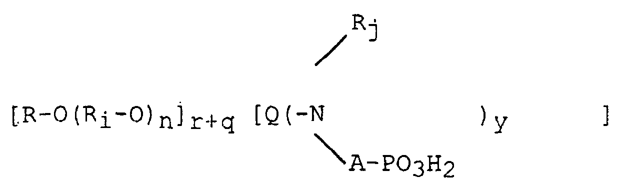
in which:
. R is a hydrogen atom or a saturated or nonsaturated monovalent hydrocarbon group, containing from 1 to 18 carbon atoms (limits included) and optionally one or more hetero atoms;
. 50% to 100% of the groups Rᵢ are ethylene, 0 to 50% of the groups Rᵢ are propylene and 0 to 5% of any other groups Rᵢ are the same or different from each other and represent an alkylene selected from the group containing butylene, amylene, octylene or cyclohexene, or an arylene selected from the group containing styrene or methylstyrene; the groups Rᵢ optionally containing one or more hetero atoms;
. Q is a hydrocarbon group containing from 2 to 18 carbon atoms (limits included) and optionally one or more hetero atoms;
. A is an alkylidene group containing from 1 to 3 (limits included) carbon atoms;
. the groups Rⱼ are the same or different from each other and are selected from the group consisting of:
* the group A-PO₃ H₂, wherein A is as defined above;
* and the group 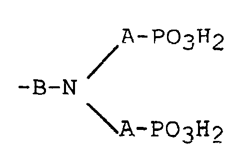
in which B is an alkylene group containing from 2 to 8 carbon atoms, and A is as defined above;
n is an integral number between 20 and 250;
r is the number of (R-O(Rᵢ-O)ₙ) groups carried by Rⱼ;
q is the number of (R-O(Rᵢ-O)ₙ) groups carried by Q;
the sum (r+q) is at most equal to 3; and
y is an integral number equal to 1 or 2;
and **in that** fluidity of the self-leveling composition before pouring is such that, when a sample of this composition is poured into a reference cone having a minor diameter of 55 mm, a major diameter at the bottom of 95 mm, a height of 70 mm, and then the filled cone is removed, a circular free spreading is obtained to a diameter of at least 15 cm.

2. The self-leveling composition of claim 1, wherein the group R of the plasticizer (I) is a hydrogen atom or a monovalent hydrocarbon group, which is saturated or unsaturated, containing from 1 to 4 carbon atoms (limits included).

3. The self-leveling composition of claim 1 or 2, wherein at least 50% of the groups Rᵢ of the plasticizer (I) are ethylene and any other groups Rᵢ are propylene.

4. The self-leveling composition of claim 1, 2 or 3, wherein the hydrocarbon group Q of the plasticizer (I) contains from 2 to 12 carbon atoms (limits included).

5. The self-leveling composition of claim 4, wherein the hydrocarbon group Q of the plasticizer (I) contains from 2 to 6 carbon atoms (limits included).

6. The self-leveling composition of claim 5, wherein the hydrocarbon group Q of the plasticizer (I) is ethylene or propylene.

7. The self-leveling composition of any one of the preceding claims, wherein the group Rⱼ of the plasticizer (I) is selected from the groups, which are optionally in salt form, consisting of -CH₂ -PO₃H₂, C₂H₄N(CH₂-PO₃H₂)₂ and -C₃H₆N(CH₂-PO₃H₂)₂.

8. The self-leveling composition of any one of the preceding claims, wherein «n» in the formula for the plasticizer (I) is between 30 and 150 (limits included).

9. The self-leveling composition of claim 8, wherein n in the formula for the plasticizer (I) is between 50 and 100 (limits included).

10. The self-leveling composition of any one of the preceding claims, wherein the sum of (r+q) in the formula for the plasticizer (I) is equal to 1.

11. The self-leveling composition of any one of the preceding claims, wherein «y» in the formula for the plasticizer (I) is equal to 1.

12. The self-leveling composition of claim 1, wherein the formula of the plasticizer (I) is such that Rᵢ is ethylene, Rⱼ is -CH₂-PO₃H₂, «n» is between 30 and 150 (limits included), preferably between 50 and 100 (limits included), (r+q) is equal to 1 and «y» is equal to 1.

13. The self-leveling composition of claim 12, wherein compound (I), which is optionally in salt form, has the formula (II):

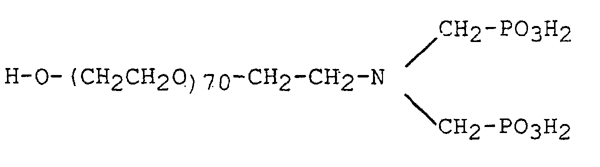

14. The self-leveling composition of any one of the preceding claims, wherein the quantity of compound (I) is comprised between 0.2 and 2% by dry weight relative to the weight of cement, and preferably between 0.3 and 0.8%.

15. The self-leveling composition of any one of the preceding claims, wherein the self-leveling composition comprises at least one thickening agent.

16. The self-leveling composition of any one of the preceding claims, wherein the self-leveling composition further comprises a water-soluble or water-dispersible plasticizer (PCP), which is based on carboxylated vinyl monomers and optionally on sulfonated vinyl monomers, and which contains polyether chains.

17. The self-leveling composition of any one of the preceding claims, wherein the self-leveling composition further comprises at least one anti-foaming agent.

18. The self-leveling composption of any one of the preceding claims, wherein the self-leveling composition further comprises fine mineral aggregates.

19. The self-leveling composition of any one of the preceding claims, wherein it comprises:
- 200 to 400 kg/m³ of Portland cement;
- 100 to 400 kg/ m³ of fine mineral aggregates;
- 1100 to 1600 kg/ m³ of sand with a maximum grain size smaller than or equal to 10 mm;
- water, with a water-to-cement ratio between 0.6 and 1.2;
- at least one anti-foaming agent;
- at least one thickening agent; and
- at least one compound (I) as plasticizer, in a proportion of 0.2 to 2% by dry weight relative to the weight of cement, and optionally at least one plasticizer of PCP type.

20. The self-leveling composition of claim 19, wherein the sand has a maximum grain size smaller than or equal to 5 mm.

21. The self-leveling composition of any one of the preceding claims, wherein fluidity of the self-leveling composition before the pouring operation is such that the circular free spreading obtained with the reference cone has a diameter at least equal to 17 cm.

22. The self-leveling composition of any one of the preceding claims, wherein fluidity of the self-leveling composition before the pouring operation is such that the circular free spreading obtained with the reference cone is on the order of 23 cm more or less 3 cm.

23. Floor screed, wherein it is manufactured from a self-leveling composition defined in any one of claims 1 to 22.

## Patentansprüche

1. Selbstausgleichende Zusammensetzung zur Herstellung einer Bodenabdeckung, **dadurch gekennzeichnet, dass**:
- die besagte Zusammensetzung Portlandzement (CEM I) oder vermischten Zement (CEM II oder CEM III) umfasst, Sand, wenigstens ein feine mineralische Füllstoff, deren Partikel Abmessungen von höchstens 200 Mikrometern haben, und Wasser,
- die Menge von feinen Partikeln mit Abmessungen von höchstens 100 Mikrometern an, die aus der feinen mineralischen Füllstoffe und dem Zement stammt, ist gleich oder höher als 500 kg pro m³ der besagten selbstausgleichenden Zusammensetzung,
- Das Gewichtsverhältnis Wasser zu Zement ist gleich oder höher als 0,6,
- die besagte Zusammensetzung umfasst außerdem wenigstens einen Verflüssiger, der eine wasserlösliche oder in Wasser dispergierbare organische Komponente (I) mit wenigstens einer Amino-di (alkylenphosphonischer) Gruppierung und wenigstens einer polyoxyalkylierten Kette oder wenigstens ein Salz der organischen Komponente (I) umfasst, wobei die besagte Komponente (I) folgender Formel (I) entspricht: 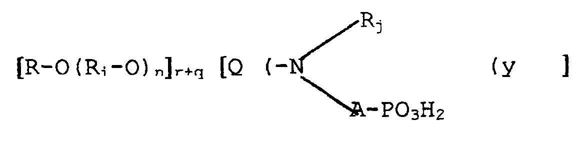
in der
• R ein Wasserstoffatom oder eine einwertige, gesättigte oder ungesättigte Kohlenwasserstoff Gruppe mit 1 bis 18 (einschließlich) Kohlenstoffatomen und eventuell einem oder mehreren Heteroatomen ist,
• 50 bis 100 % den Rᵢ Gruppen sind Ethylen, 0 bis 50 % des Rᵢ sont Propylen und 0 bis 5 % der eventuellen anderen Rᵢ sind zwischeneinander ähnlich oder unterschiedlich und repräsentieren ein Alkylen, wie zum Beispiel Butylen, Amylen, Oktylen oder Cyclohexen oder ein Arylen wie zum Beispiel Styrol oder Methylstyren die Rᵢ beinhalten eventuell ein oder mehrere Heteroatome,
• Q ist eine Kohlenwasserstoff Gruppe mit 2 bis 18 (einschließlich) Kohlenstoffatomen und eventuell einem oder mehreren Heteroatomen,
• A ist eine Alkylidengruppe mit 1 bis 3 (einschließlich) Kohlenstoffatomen,
• die Rⱼ sind zwischeneinander ähnlich oder unterschiedlich und können ausgewählt sein aus:
* der Gruppe A-PO₃H₂, wobei A die vorgenannte Bedeutung hat
* und der Gruppe 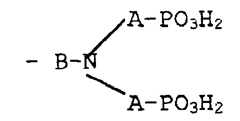
- in der B eine Alkylen-Gruppierung mit 2 bis 8 (einschließlich) Kohlenstoffatomen bezeichnet und A die vorgenannte Bedeutung hat,
• "n" ist eine, zwischen 20 und 250, inbegriffene ganze Zahl,
• "r" ist die Zahl der von allen Rj getragenen Gruppen [R-O (Rᵢ-O)n]
• "q" ist die Zahl der von allen Q getragenen Gruppe [R-O (Rᵢ-O)n]
• die Summe "r+q" ist höchstens gleich 3
• "y" ist eine ganze Zahl gleich 1 oder 2,
dass die Flüssigkeit der selbstausgleichenden Zusammensetzung vor der Gussoperation derart ist, dass, wenn das Muster dieser Zusammensetzung in einen Referenzkegel mit einem kleinen Durchmesser von 55 mm gegossen wird, ein großer, nach unten ausgerichteter Durchmesser von 95 mm und einer Höhe von 70 mm bei abgenommenem gefülltem Kegel, man eine freie kreisförmige Breitenstreuung mit einem Durchmesser von wenigstens 15 cm erhält.

2. Selbstausgleichende Zusammensetzung gemäß Anspruch 1, **dadurch gekennzeichnet, dass** die Gruppierung R des Verflüssigers (I) ein Wasserstoffatom oder eine gesättigte oder nicht gesättigte einwertige Kohlenwasserstoff Gruppe mit 1 bis 4 Kohlenstoffatomen ist.

3. Selbstausgleichende Zusammensetzung gemäß Anspruch 1 oder 2, **dadurch gekennzeichnet, dass** wenigstens 50 % der Rᵢ des Verflüssigers (I) Ethylen sind und die eventuellen anderen Rᵢ Propylen sind.

4. Selbstausgleichende Zusammensetzung gemäß Anspruch 1, 2 oder 3, **dadurch gekennzeichnet, dass** die Kohlenwasserstoff Gruppe Q des Verflüssigers (I) 2 bis 12 (einschließlich) Kohlenstoffatome beinhaltet.

5. Selbstausgleichende Zusammensetzung gemäß Anspruch 4, **dadurch gekennzeichnet, dass** die Kohlenwasserstoff Gruppe Q des Verflüssigers (I) 2 bis 6 Kohlenstoffatome beinhaltet.

6. Selbstausgleichende Zusammensetzung gemäß Anspruch 5, **dadurch gekennzeichnet, dass** die Kohlenwasserstoff Gruppe Q des Verflüssigers (I) Ethylen oder Propylen ist.

7. Selbstausgleichende Zusammensetzung gemäß einem der vorherigen Ansprüche, **dadurch gekennzeichnet, dass** die Gruppe Rⱼ des Verflüssigers (I) aus den eventuell in Salzform bestehenden Gruppen -CH₂-PO₃H₂, -C₂H₄N (CH₂-PO₃H₂) und -C₃H₆N (CH₂-PO₃H₂)₂ ausgewählt ist.

8. Selbstausgleichende Zusammensetzung gemäß einem der vorhergehenden Ansprüche, **dadurch gekennzeichnet, dass** die Formel des Verflüssigers (I) derart ist, dass "n" zwischen 30 und 150 (Grenzwerte eingeschlossen) inbegriffen ist.

9. Selbstausgleichende Zusammensetzung gemäß Anspruch 8, **dadurch gekennzeichnet, dass** die Formel des Verflüssigers (I) derart ist, dass "n" zwischen 50 und 100 (Grenzwerte eingeschlossen) inbegriffen ist.

10. Selbstausgleichende Zusammensetzung gemäß einem der vorherigen Ansprüche, **dadurch gekennzeichnet, dass** die Formel des Verflüssigers (I) derart ist, dass die Summe "r+q" gleich 1 ist.

11. Selbstausgleichende Zusammensetzung gemäß einem der vorherigen Ansprüche, **dadurch gekennzeichnet, dass** die Formel des Verflüssigers (I) derart ist, dass "y" gleich 1 ist.

12. Selbstausgleichende Zusammensetzung gemäß Anspruch 1, **dadurch gekennzeichnet, dass** die Formel des Verflüssigers (I) derart ist, dass Rᵢ Ethylen ist, Rⱼ -CH₂-PO₃H₂, n zwischen 30 und 150 (Grenzwerte eingeschlossen) inbegriffen ist, bevorzugt zwischen 50 und 100 (Grenzwerte eingeschlossen), "r+q" gleich 1 ist und "y" gleich 1 ist.

13. Selbstausgleichende Zusammensetzung gemäß Anspruch 12, **dadurch gekennzeichnet, dass** die eventuell in Salzform bestehende Komponente (I) folgende Formel (II) hat:

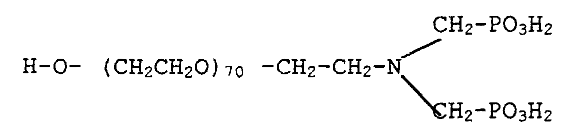

14. Selbstausgleichende Zusammensetzung gemäß einem der vorhergehenden Ansprüche, **dadurch gekennzeichnet, dass** die Menge der Komponente (I) zwischen 0,2 und 2 an Trockengewichtsprozent im Vergleich zum Zementgewicht, bevorzugt zwischen 0,3 und 0,8 %, inbegriffen ist.

15. Selbstausgleichende Zusammensetzung gemäß einem der vorherigen Ansprüche, **dadurch gekennzeichnet, dass** die selbstausgleichende Zusammensetzung wenigstens ein Verdickungsmittel umfasst.

16. Selbstausgleichende Zusammensetzung gemäß einem der vorhergehenden Ansprüche, **dadurch gekennzeichnet, dass** die selbstausgleichende Zusammensetzung ausserdem wasserlöslichen oder in Wasser dispergierbaren Verflüssiger (PCP) entsteht der auf der Basis von vinylhaltigen, carboxylhaltigen Monomeren und eventuell von vinylhaltigen, sulforierten Monomeren umfasst, darüber hinaus einen Polyetherketten umschließt.

17. Selbstausgleichende Zusammensetzung gemäß einem der vorhergehenden Ansprüche, **dadurch gekennzeichnet, dass** die selbstausgleichende Zusammensetzung wenigstens ein Schaumgegenmittel umfasst.

18. Selbstausgleichende Zusammensetzung gemäß einem der vorhergehenden Ansprüche, **dadurch gekennzeichnet, dass** die selbstausgleichende Zusammensetzung feinen mineralischen Füllstoffe umfasst.

19. Selbstausgleichende Zusammensetzung gemäß einem der vorhergehenden Ansprüche, **dadurch gekennzeichnet, dass** sie Folgendes umfasst:
- 200 bis 400 kg/m³ Portlandzement;
- 100 bis 400 kg/m³ feinen mineralischen Füllstoffe;
- 1100 bis 1600 kg/m³ Sand mit einer maximalen Korngröße von unter 10 mm;
- Wasser in einem zwischen 0,6 und 1,2 inbegriffenen Verhältnis (W/Z) ;
- wenigsten ein Schaumgegenmittel;
- wenigstens ein Eindickungsmittel;
- wenigstens eine Komponente (I) als Verflüssiger, und zwar 0,2 bis 2 % Trockengewichtsprozent zum Zementgewicht mitgebracht wird, und eventuell wenigstens einen Verflüssiger vom Typ PCP.

20. Selbstausgleichende Zusammensetzung gemäß Anspruch 19, **dadurch gekennzeichnet, dass** der Sand eine maximale Korngröße von unter oder gleich 5 mm hat.

21. Selbstausgleichende Zusammensetzung gemäß einem der vorhergehenden Ansprüche, **dadurch gekennzeichnet, dass** seine Fließfähigkeit vor der Gussoperation derart ist, dass die mit dem Referenzkegel erhaltene freie kreisförmige Breitenstreuung einen Durchmesser von wenigstens 17 cm hat.

22. Selbstausgleichende Zusammensetzung gemäß einem der vorhergehenden Ansprüche, **dadurch gekennzeichnet, dass** seine Fließfähigkeit vor der Gussoperation derart ist, dass die mit dem Referenzkegel erreichte freie kreisförmige Breitenstreuung in der Größenordnung von 23 cm plus oder minus 3 cm liegt.

23. Bodenabdeckung, **dadurch gekennzeichnet, dass** sie aus einer in Anspruch 1 bis 22 definierten selbstausgleichenden Zusanmensetzung hergestellt ist.
